# FASCICULE DE BREVET EUROPEEN

(11) **EP 2 958 793 B1**
(45) Date de publication et mention de la délivrance du brevet: **13.06.2018**
(21) Numéro de dépôt: 14704862.3
(22) Date de dépôt: 30.01.2014
(51) Int. Cl.: B62D 25/08

(54) **PARTIE AVANT DE LA CAISSE D'UN VEHICULE AUTOMOBILE COMPORTANT UN TIRANT RELIANT LA TRAVERSE INFERIEURE DE LA BAIE DU PARE-BRISE AU SUPPORT DE SUSPENSION**
VORDERTEIL DER SCHALE EINES KRAFTFAHRZEUGS MIT EINEM ZUGANKER ZUM VERBINDEN DES UNTEREN QUERTRÄGERS DER WINDSCHUTZSCHEIBENÖFFNUNG MIT DER AUFHÄNGUNGSKLAMMER
FRONT PORTION OF THE SHELL OF A MOTOR VEHICLE COMPRISING A TIE ROD CONNECTING THE LOWER CROSSBEAM OF THE WINDSCREEN OPENING TO THE SUSPENSION BRACKET

(30) Priorité: 22.02.2013 FR 1351533
(43) Date de publication de la demande: 30.12.2015
(73) Titulaire: PSA Automobiles SA, 78300 Poissy (FR)
(72) Inventeur: NORREEL, Franck, F-90120 Mezire (FR)
(74) Mandataire: Fosse, Danièle
(86) Numéro de dépôt international: PCT/FR2014/050162
(87) Numéro de publication internationale: WO 2014/128374

(56) Documents cités:
- EP-A1- 2 399 807
- DE-A1-102010 011 320
- US-A1- 2007 215 402
- US-A1- 2011 084 518
- US-A1- 2012 169 023

## Description

La présente invention concerne une partie avant de la caisse d'un véhicule automobile qui comprend de chaque côté un brancard avant dont l'extrémité arrière est reliée à un support de la suspension de l'une des roues avant et une traverse inférieure de la baie du pare-brise formant un auvent ouvert.

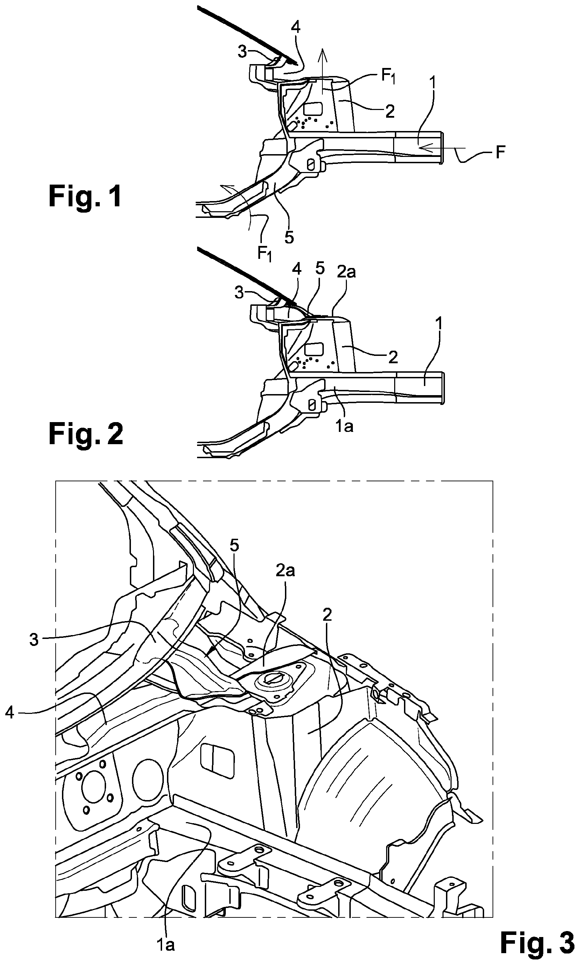

La figure 1 est une vue en coupe longitudinale d'une partie avant de ce type.

Sur cette figure 1 l'extrémité arrière du brancard avant 1 est reliée rigidement à un support 2 de la suspension de l'une des roues avant.

La référence 3 désigne la traverse inférieure de la baie du pare-brise.

Cette traverse 3 s'étend transversalement derrière et au-dessus de chacun des deux supports 2 de la suspension.

L'espace 4 compris entre la traverse 3 et la face supérieure 2a du support de suspension 2 est appelé auvent.

Dans la plupart des véhicules automobiles l'espace d'auvent 4 ci-dessus est fermé par une cloison en tôle.

Dans un nouveau concept de la Demanderesse, l'auvent ci-dessus est ouvert vers l'avant.

En cas de choc frontal du véhicule, le brancard avant 1 est sollicité en compression, comme montré par la flèche F.

En raison du porte à faux vertical dû à la descente 5 du brancard sous le plancher du véhicule, cette descente 5 subit une flexion montrée par la flèche F₁ qui a pour effet de pousser vers le haut le brancard avant 1 et le support de suspension 2, comme indiqué par la flèche F₂.

Le déplacement vers le haut du support de suspension 2 est favorisé par le fait que l'espace d'auvent 4 est ouvert vers l'avant.

De ce fait, on risque une sur-intrusion de l'arrière du brancard avant dans l'habitacle du véhicule.

Dans US 2012/0169023, on décrit une partie avant de la caisse d'un véhicule automobile comprenant de chaque côté un brancard avant dont l'extrémité arrière est reliée à un support de la suspension de l'une des roues avant et une traverse inférieure de la baie du pare-brise formant un auvent ouvert. La traverse inférieure de la baie du pare-brise est reliée à la face supérieure du support de suspension par une entretoise rectiligne.

Le but de la présente invention est de remédier à cet inconvénient.

Ce but est atteint, selon l'invention, grâce à une partie avant de la caisse d'un véhicule automobile comprenant de chaque côté un brancard avant dont l'extrémité arrière est reliée à un support de la suspension de l'une des roues avant et une traverse inférieure de la baie du pare-brise formant un auvent ouvert, la traverse inférieure de la baie du pare-brise étant reliée à la face supérieure dudit support de suspension par un tirant, caractérisée en ce que le tirant est une pièce en tôle emboutie qui comprend deux parties formant entre elles un angle obtus dont le sommet est dirigé vers l'avant et vers le haut, de telle sorte que ce dernier puisse limiter le déplacement vers le haut dudit support de suspension, en cas de choc frontal du véhicule.

Ainsi, en limitant le déplacement vers le haut du support de suspension, le tirant, qui relie la traverse de baie de pare-brise et le support de suspension, permet d'améliorer la compressibilité de chacun des deux brancards avant et de limiter l'intrusion dans l'habitacle en cas de choc frontal.

De préférence, chacun des deux tirants est agencé pour pouvoir, en début de choc frontal, limiter le déplacement vers le haut du support de suspension, puis après la fin de la phase de compression du brancard avant, fléchir sous l'effet de l'augmentation des efforts de compression appliqués sur le brancard.

Le tirant ci-dessus est constitué par une pièce en tôle suffisamment résistante pour supporter une partie de l'énergie engendrée en cas de choc frontal.

Selon d'autres particularités avantageuses de l'invention :
- ladite pièce en tôle comporte une nervure médiane s'étendant sur toute la longueur de la pièce et faisant saillie vers l'avant et vers le haut ;
- chacune des deux extrémités opposées du tirant porte une platine fixée par vissage ou soudage respectivement à la traverse inférieure de la baie du pare-brise et sur la face supérieure dudit support de suspension ;
- ledit tirant est situé sensiblement à la verticale de la partie arrière du brancard avant.

Selon un autre aspect, l'invention concerne également un véhicule automobile comportant une partie avant de la caisse selon l'invention.

D'autres particularités et avantages de l'invention apparaîtront encore tout au long de la description ci-après.

Aux dessins annexés, donnés à titre d'exemples, non limitatifs :
- la figure 2 est une vue analogue à la figure 1 montrant le tirant qui relie, conformément à l'invention, la traverse inférieure de la baie du pare-brise et le support de suspension,
- la figure 3 est une vue en perspective montrant la traverse inférieure de la baie, le support de suspension et le tirant disposé entre cette traverse et ce support,
- la figure 4 est une vue latérale à échelle agrandie du tirant, montré sur les figures 2 et 3,
- la figure 5 est une vue analogue à la figure 2 montrant les déformations obtenues en début de choc frontal sur la partie avant de la caisse selon l'invention,
- la figure 6 est une vue analogue à la figure 5 montrant à titre de comparaison, les déformations obtenues en début de choc frontal sur une partie avant de la caisse, dépourvue de tirant,
- la figure 7 est une vue analogue à la figure 5 montrant les déformations obtenues en fin de choc frontal,
- la figure 8 est une vue analogue à la figure 6 montrant les déformations obtenues en fin de choc frontal, en l'absence de tirant.

Les figures 2 et 3 représentent partiellement la partie avant de la caisse d'un véhicule automobile comprenant de chaque côté un brancard avant 1 dont l'extrémité arrière 1a est reliée à un support 2 de la suspension de l'une des roues avant et une traverse inférieure 3 de la baie du pare-brise formant un auvent 4 ouvert vers l'avant.

Conformément à l'invention, la traverse inférieure 3 de la baie du pare-brise est reliée à la face supérieure 2a du support de suspension 2 par un tirant 5, de telle sorte que ce dernier puisse limiter le déplacement vers le haut du support de suspension 2, en cas de choc frontal du véhicule.

Le tirant 5 est agencé pour pouvoir, en début de choc frontal, limiter le déplacement vers le haut du support de suspension 2, puis après la fin de la phase de compression du brancard avant 1, fléchir sous l'effet de l'augmentation des efforts de compression appliqués sur le brancard 1.

Le tirant 5 permet ainsi d'augmenter la compressibilité de la partie avant de la caisse, ce qui lui permet d'augmenter l'énergie absorbée lors d'un choc frontal, tout en limitant l'intrusion des brancards à l'intérieur de l'habitacle.

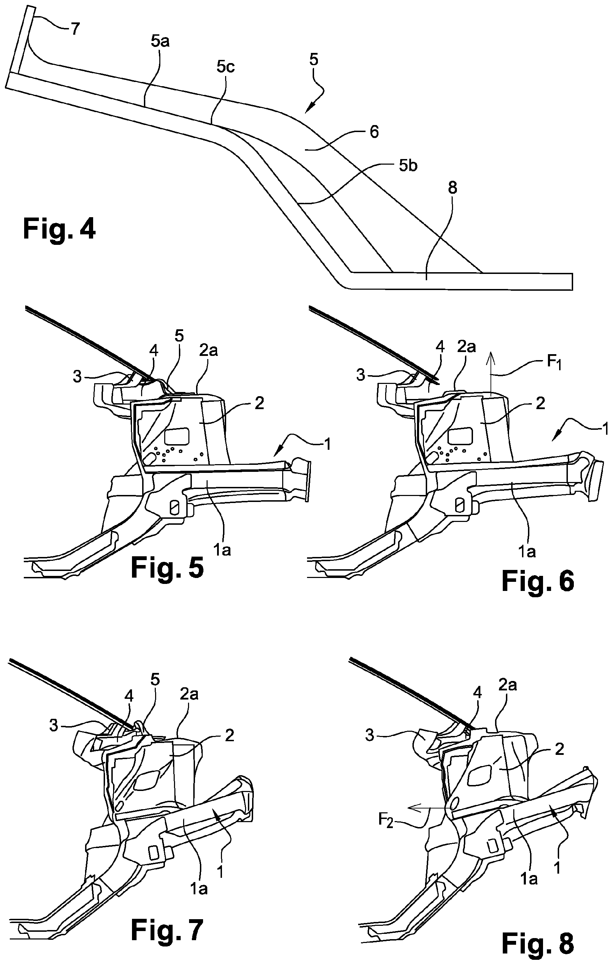

Le tirant 5, représenté en détail sur la figure 4, est une pièce en tôle emboutie qui comprend deux parties principales 5a, 5b formant entre elles un angle obtus dont le sommet 5c est dirigé vers l'avant et vers le haut.

De plus, la pièce en tôle constituant le tirant 5 comporte une nervure médiane 6 s'étendant sur toute la longueur de la pièce et faisant saillie vers l'avant et vers le haut.

La section du tirant 5 augmente près de son extrémité reliée au support de suspension 2, ce qui confère à la partie 5b du tirant 5 une grande résistance aux efforts de flexion.

La figure 4 montre également que chacune des deux extrémités opposées du tirant 5 porte une platine 7, 8 destinée à être fixée par vissage ou soudage respectivement à la traverse inférieure 3 de la baie du pare-brise et sur la face supérieure 2a du support de suspension 2.

Par ailleurs, les figures 3 et 4 montrent que le tirant 5 est situé sensiblement à la verticale de la partie arrière 1a du brancard avant 1.

Les figures 5 et 7 illustrent le comportement, en cas de choc frontal, d'une partie avant de la caisse d'un véhicule automobile qui comprend selon l'invention un tirant 5 qui relie la traverse inférieure 3 de la baie au support de suspension 2.

Les figures 6 et 8 illustrent, à titre de comparaison, le comportement d'une partie avant de caisse, dépourvue de tirant 5.

Au début du choc frontal, la partie avant du brancard 1 est comprimée, comme montré sur les figures 5 et 6.

Pendant cette phase, le tirant 5 résiste aux efforts, ce qui bloque le déplacement vers le haut du brancard 1 et du support de suspension 2.

Du fait de l'absence de tirant 5 dans le cas de la partie avant de caisse représentée sur la figure 6, lors de la phase initiale du choc frontal, le support 2 et le brancard 1 se déplacent vers le haut, comme montré sur la figure 6, sous l'effet de la force qui comprime l'avant du brancard 1.

Du fait de ce déplacement vers le haut, la compressibilité du brancard 1 est moins exploitée que dans le cas de l'invention, comme le montre la figure 5.

Lors de la seconde phase du choc, le tirant 5 fléchit sous l'effet des efforts, comme montré sur la figure 7.

Cette flexion est favorisée par la forme angulaire du tirant 5, telle que montrée sur la figure 4.

Du fait de cette flexion, le support 2 et le brancard 1 se déplacent vers le haut, comme indiqué sur la figure 7, en absorbant davantage d'énergie pour éviter une intrusion dans l'habitacle.

En l'absence du tirant 5, (voir figure 8), le brancard 1 et le support 2 remontent davantage et l'intrusion à l'intérieur de l'habitacle est plus prononcée, comme montré par la flèche F₂.

Lors d'un essai comparatif, l'ajout de tirants 5 entre la traverse 3 et le support 2 a permis de réduire de 25 mm l'intrusion à l'intérieur de l'habitacle.

## Revendications

1. Partie avant de la caisse d'un véhicule automobile comprenant de chaque côté un brancard avant (1) dont l'extrémité arrière (1a) est reliée à un support (2) de la suspension de l'une des roues avant et une traverse inférieure (3) de la baie du pare-brise formant un auvent ouvert (4), la traverse inférieure (3) de la baie du pare-brise étant reliée à la face supérieure (2a) dudit support de suspension (2) par un tirant (5), **caractérisée en ce que** le tirant (5) est une pièce en tôle emboutie qui comprend deux parties (5a, 5b) formant entre elles un angle obtus dont le sommet (5c) est dirigé vers l'avant et vers le haut, de telle sorte que ce dernier puisse limiter le déplacement vers le haut dudit support de suspension (2), en cas de choc frontal du véhicule.

2. Partie avant de la caisse selon la revendication 1, **caractérisée en ce que** le tirant (5) est agencé pour pouvoir, en début de choc frontal, limiter le déplacement vers le haut du support de suspension (2), puis après la fin de la phase de compression du brancard avant (1), fléchir sous l'effet de l'augmentation des efforts de compression appliqués sur le brancard (1).

3. Partie avant de la caisse selon l'une des revendications 1 et 2, **caractérisée en ce que** ladite pièce en tôle comporte une nervure médiane (6) s'étendant sur toute la longueur de la pièce et faisant saillie vers l'avant et vers le haut.

4. Partie avant de la caisse selon l'une des revendications 1 à 3, **caractérisée en ce que** chacune des deux extrémités opposées du tirant (5) porte une platine (7, 8) fixée par vissage ou soudage respectivement à la traverse inférieure (3) de la baie du pare-brise et sur la face supérieure (2a) dudit support de suspension (2).

5. Partie avant de la caisse selon l'une des revendications 1 à 4, **caractérisée en ce que** ledit tirant (5) est situé sensiblement à la verticale de la partie arrière (1a) du brancard avant (1).

6. Véhicule automobile comportant une partie avant de la caisse selon l'une des revendications 1 à 5.

## Patentansprüche

1. Vorderteil der Schale eines Kraftfahrzeugs, das auf jeder Seite einen vorderen Bodenlängsträger (1) umfasst, dessen hinteres Ende (1a) mit einer Klammer (2) der Aufhängung eines der vorderen Räder verbunden ist, und einen unteren Querträger (3) der Windschutzscheibenöffnung, der ein offenes Windlaufquerteil (4) bildet, wobei der untere Querträger (3) der Windschutzscheibenöffnung mit der oberen Fläche (2a) der Aufhängungsklammer (2) durch einen Zugstab (5) verbunden ist, **dadurch gekennzeichnet, dass** der Zugstab (5) ein gestanztes Blechteil ist, das zwei Teile (5a, 5b) umfasst, die zwischen einander einen stumpfen Winkel bilden, dessen Scheitel (5c) derart nach vorn und nach oben gerichtet ist, dass dieser Letztere die Verlagerung nach oben der Aufhängungsklammer (2) bei einem Frontalaufprall des Fahrzeugs einschränken kann.

2. Vorderteil der Schale nach Anspruch 1, **dadurch gekennzeichnet, dass** der Zugstab (5) eingerichtet ist, um am Anfang eines Frontalaufpralls die Verlagerung nach oben der Aufhängungsklammer (2) einzuschränken, sich dann, nach dem Ende der Kompressionsphase des vorderen Bodenlängsträgers (1), unter der Einwirkung der Erhöhung der Kompressionskräfte, die auf den Bodenlängsträger (1) angelegt werden, zu biegen.

3. Vorderteil der Schale nach einem der Ansprüche 1 und 2, **dadurch gekennzeichnet, dass** das Blechteil eine mittlere Rippe (6) umfasst, die sich auf der gesamten Länge des Teils erstreckt und nach vorn und nach oben vorragt.

4. Vorderteil der Schale nach einem der Ansprüche 1 bis 3, **dadurch gekennzeichnet, dass** jedes der zwei entgegengesetzten Enden des Zugstabs (5) eine Platte (7, 8) trägt, die durch Schrauben oder Schweißen jeweils an dem unteren Querträger (3) der Windschutzscheibenöffnung und auf der oberen Fläche (2a) der Aufhängungsklammer (2) befestigt ist.

5. Vorderteil der Schale nach einem der Ansprüche 1 bis 4, **dadurch gekennzeichnet, dass** der Zugstab (5) im Wesentlichen in der Vertikalen des hinteren Teils (1a) des vorderen Bodenlängsträgers (1) liegt.

6. Kraftfahrzeug, das einen Vorderteil der Schale nach einem der Ansprüche 1 bis 5 umfasst.

## Claims

1. A front portion of the shell of a motor vehicle including, on either side, a front rail (1), the rear end (1a) of which is connected to a support (2) of the suspension of one of the front wheels, and a lower crossbeam (3) of the windscreen opening forming an open cowl (4), the lower crossbeam (3) of the windscreen opening being connected to the upper face (2a) of said suspension support (2) by a tie rod (5), **characterized in that** the tie rod (5) is a stamped sheet metal part which includes two portions (5a, 5b) forming between them an obtuse angle, the vertex (5c) of which is directed toward the front and upwards, such that the latter can limit the upward displacement of said suspension support (2), in the case of a frontal impact of the vehicle.

2. The front portion of the shell according to claim 1, **characterized in that** the tie rod (5) is arranged so as to be able, at the start of a frontal impact, to limit the upward displacement of the suspension support (2), then after the end of the compression phase of the front rail (1), to bend under the effect of the increase of the compressive stresses applied on the rail (1).

3. The front portion of the shell according to one of claims 1 and 2, **characterized in that** said sheet metal part comprises a median rib (6), extending over the entire length of the part and projecting toward the front and upward.

4. The front portion of the shell according to one of claims 1 to 3, **characterized in that** each of the two opposite ends of the tie rod (5) carries a plate (7, 8) fixed by screwing or welding respectively to the lower crossbeam (3) of the windscreen opening and on the upper face (2a) of said suspension support (2).

5. The front portion of the shell according to one of clams 1 to 4, **characterized in that** said tie rod (5) is situated substantially vertical to the rear portion (1a) of the front rail (1).

6. A motor vehicle comprising a front portion of the shell according to one of claims 1 to 5.
